# FASCICULE DE BREVET EUROPEEN

(11) **EP 0 367 673 B1**
(45) Date de publication et mention de la délivrance du brevet: **10.08.1994**
(21) Numéro de dépôt: 89403004.8
(22) Date de dépôt: 31.10.1989
(51) Int. Cl.: G05B 19/06

(54) **Programmateur, notamment pour appareil électroménager**
Programmschalteinrichtung, in besondere für elektrisches Haushaltsgerät
Programmer, in particular for an electric household appliance

(30) Priorité: 04.11.1988 FR 8814406
(43) Date de publication de la demande: 09.05.1990
(73) Titulaire: CROUZET Electroménager, F-26000 Valence (FR)
(72) Inventeur: Purson, Hervé, F-26300 Bourg de Peage (FR); Girardin, Denis, F-26300 Bourg de Peage (FR)
(74) Mandataire: Bloch, Gérard

(56) Documents cités:
- EP-A- 0 229 021
- FR-A- 1 293 805
- FR-A- 1 495 223

## Description

La présente invention a pour objet un programmateur pour appareil, ou système, pourvu d'une pluralité d'organes électriques à alimenter sélectivement et séquentiellement, programmateur comprenant une pluralité de cames réparties en un premier et un deuxième blocs munis de moyens de couplage mécanique, lesdites cames coopérant avec une pluralité de contacts d'alimentation desdits organes, et des moyens d'entraînement desdites cames en déplacement.

Un tel programmateur est utilisé en particulier dans le domaine électroménager, pour des appareils comme les machines à laver le linge ou la vaisselle par exemple, et est connu par le document FR-A-1 495 223.

On connaît déjà des programmateurs du type défini ci-dessus, dans lesquels les deux blocs de cames sont solidaires pour former en fait un ensemble de cames unique, et les moyens d'entraînement comprennent un moteur dont l'arbre de sortie entraîne l'ensemble. Dans ce type de programmateur, le déroulement du ou des programmes dépend de la façon dont se succèdent, à la périphérie des cames, les bosses d'actionnement des différents contacts. Pour modifier ce déroulement, il faut modifier les profils de cames. En pratique, chaque exemplaire d'un tel programmateur n'est donc, après fabrication, plus adaptable. En effet, le programme, ou l'ensemble de programmes, qu'il est susceptible de faire se dérouler est figé et non modifiable.

Dans le document précité, l'un ou l'autre bloc de cames est sélectionné à l'aide d'un commutateur électrique.

On connaît aussi des programmateurs du type défini ci-dessus, pour lesquels les organes à alimenter sont répartis en deux groupes. Le premier groupe est alimenté par l'intermédiaire de commutateurs à relais commandés par un circuit électronique. Le second groupe est alimenté par l'intermédiaire de contacts actionnés par un bloc de cames, de façon similaire à ce qui vient d'être décrit.

Par exemple, dans le cas d'une machine à laver le linge, on prévoit d'alimenter le moteur d'entraînement du tambour par l'intermédiaire de relais commandés électroniquement, tandis que d'autres organes comme, par exemple, l'électrovanne d'admission d'eau, la pompe de vidange, et la résistance de chauffage de l'eau, sont alimentés par l'intermédiaire de contacts actionnés par un bloc de cames entraîné par un moteur.

Un tel programmateur est donc partiellement adaptable, dans la mesure où il permet de choisir et de faire varier électroniquement la durée d'entraînement du tambour dans un sens, puis dans l'autre, par exemple. De plus, ce choix reste sans influence sur la commande de l'électrovanne, de la pompe, et de la résistance.

Un tel programmateur est souvent appelé programmateur hybride, car il combine des contacts commandés mécaniquement et des relais commandés électroniquement. Il permet de résoudre en partie les problèmes liés au manque d'adaptabilité du programmateur déjà décrit qui comporte un unique bloc de cames pour commander la totalité des organes. Toutefois la nécessité d'utiliser des relais augmente le prix de revient du programmateur et en diminue la fiabilité.

La présente invention vise à pallier les inconvénients précédents en procurant un programmateur au moins partiellement adaptable, d'un prix de revient modéré, et fiable.

A cet effet, elle a pour objet un programmateur tel que défini dans la revendication 1.

Dans le programmateur de l'invention, deux modes de fonctionnement sont possibles.

Dans le premier mode, les moyens d'entraînement entraînent le premier bloc toujours dans le même sens. Alors, après un déplacement du premier bloc au plus supérieur à l'amplitude du jeu, le deuxième bloc se trouve entraîné à son tour. Les deux blocs se déplacent comme s'ils étaient solidaires, et le fonctionnement est comparable à celui d'un programmateur pourvu d'un unique bloc de cames pour commander la totalité des organes.

Pour passer au deuxième mode de fonctionnement, il suffit que, après une période de fonctionnement selon le premier mode, par exemple, les moyens d'entraînement entraînent le premier bloc en sens inverse. Alors, tant que le déplacement du premier bloc reste inférieur à l'amplitude du jeu, le deuxième bloc reste immobile. Il est alors possible, en restant à l'intérieur du débattement qui laisse immobile le second bloc, de commander des mouvements de va et vient au premier bloc pour faire exécuter aux organes commandés par le premier bloc un certain nombre de tâches, indépendamment des organes commandés par le second bloc. Or, il est facile et connu de commander électroniquement les moyens d'entraînement pour obtenir des déplacements du premier bloc de sens et d'amplitude déterminés.

Il apparaît donc que le programmateur de l'invention offre des possibilités d'adaptation comparables à celles des programmateurs connus de type "hybride".

Toutefois, le programmateur de l'invention n'utilise pas de relais, mais, à leur place des contacts actionnés par des cames, de type conventionnel, et dont le faible coût et la fiabilité sont connues.

Avec le programmateur de l'invention, on obtient un résultat comparable à celui que l'on obtiendrait avec deux blocs de cames indépendants, commandés par des moyens d'entraînement indépendants, c'est-à-dire en pratique chacun par un moteur indépendant par exemple. Il est remarquable que, dans le programmateur de l'invention, ce résultat soit atteint avec un unique moteur, par exemple, ce qui réduit notablement le coût de fabrication. Ceci provient de l'utilisation des moyens de couplage avec jeu, associé à l'entraînement dans les deux sens, permettant à la fois l'entraînement du deuxième bloc par le premier lorsque cela est nécessaire, tout en conservant, dans la limite du jeu, une indépendance relative du mouvement des deux blocs.

Dans la forme de réalisation préférée, les cames dudit premier bloc ont un profil périodique de période inférieur ou égale à l'amplitude dudit jeu.

Dans ce cas, n'importe laquelle des différentes positions de commande du premier bloc peut être atteinte à l'intérieur du jeu. Ainsi, en commandant électroniquement l'amplitude du déplacement des moyens d'entraînement, n'importe laquelle des différentes combinaisons de contacts actionnés par le premier bloc peut être obtenue sans que le deuxième bloc ne change de position. De même, en prévoyant une séquence de déplacements dans un sens et dans l'autre à l'intérieur du jeu, n'importe quel programme peut se trouver exécuté par les organes commandés par le premier bloc, indépendamment de la commande des organes commandés par le second bloc.

Avantageusement, lesdits moyens d'entraînement comprennent un moteur à double sens et un circuit électronique de commande dudit moteur.

Avantageusement encore, lesdits moyens de couplage comprennent un ergot solidaire d'un desdits blocs et un évidement pratiqué dans l'autre desdits blocs, coopérant avec ledit ergot.

On obtient ainsi une réalisation particulièrement simple et fiable.

Avantageusement encore, il est prévu des moyens pour mettre hors circuit au moins une partie desdits organes pendant le déplacement des cames correspondantes.

On évite ainsi la mise sous tension intempestive, à l'origine de bruits et de dommages, des organes en question.

Avantageusement encore, ledit appareil est une machine à laver le linge pourvue d'un tambour et de moyens d'entraînement dudit tambour en rotation, et ledit premier bloc comprend des cames coopérant avec des contacts d'alimentation desdits moyens d'entraînement du tambour en rotation, pour inverser le sens de ladite rotation.

Le programmateur de l'invention s'avère particulièrement utile dans ce cas, puisqu'il permet une grande souplesse dans la programmation des mouvements du tambour.

La présente invention sera mieux comprise grâce à la description de la forme de réalisation préférée du programmateur de l'invention, faite en se référant aux dessins annexés, sur lesquels :
- la figure 1 représente un schéma électrique d'un appareil électroménager utilisant le programmateur de l'invention,
- la figure 2 représente une vue en perspective, simplifiée, du programmateur utilisé dans l'appareil de la figure 1,
- la figure 3 représente une vue de face, simplifiée, du mécanisme de couplage entre les deux blocs de cames du programmateur de la figure 2,
- la figure 4 représente une vue de face, simplifiée des cames du premier bloc de cames du programmateur de la figure 1, et,
- la figure 5 représente une vue d'une variante de l'appareil de la figure 1.

Une machine à laver le linge utilisant le programmateur de l'invention est maintenant décrite.

Cette machine comprend, de façon connue, une pluralité d'organes électriques qui sont alimentés en énergie électrique sélectivement et séquentiellement, par l'intermédiaire d'un programmateur, de façon à réaliser un programme de lavage.

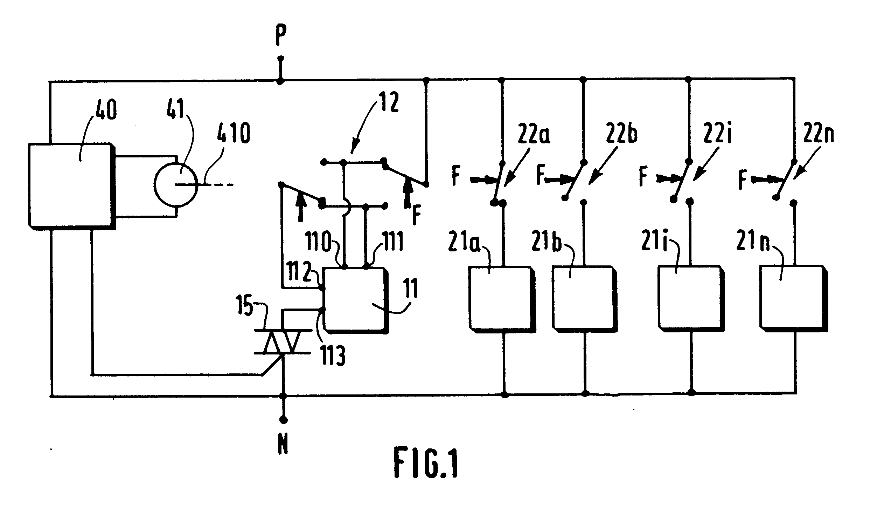

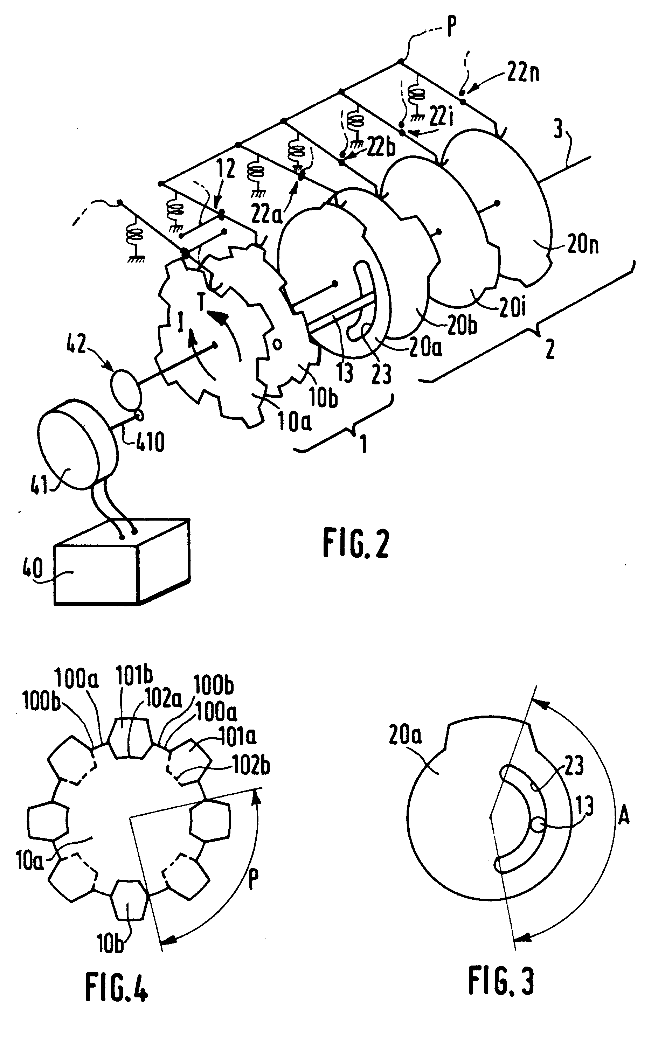

En se référant à la figure 1, la machine à laver comprend ainsi un moteur 11, de type universel, pour entraîner le tambour dans lequel est disposé le linge, une électrovanne 21a, une résistance 21b de chauffage de l'eau, une pompe de vidange 21i, et ainsi de suite jusqu'au dernier organe, qui porte la référence 21n.

L'énergie électrique est disponible entre une borne neutre N et une borne de phase P d'une source de tension alternative non représentée dans un souci de simplicité.

Le moteur universel 11 comprend notamment deux bornes 110 et 111 d'accès au rotor, et deux bornes 112 et 113 d'accès à l'inducteur. La borne P est reliée à un premier contact mobile d'un inverseur double 12, dont les quatre contacts fixes sont reliés deux à deux, et dont le deuxième contact mobile est relié à la borne d'inducteur 112. La borne d'inducteur 113 est reliée à la borne N par l'intermédiaire, ici, d'un triac 15. Chaque borne de rotor 110 et 111 est reliée respectivement à une des paires de contacts fixes reliés entre eux de l'inverseur double 12. Ainsi le sens de branchement du rotor du moteur 11, relativement au sens de branchement de son inducteur, est commandé par les contacts mobiles de l'inverseur 12, afin de commander le sens de rotation du moteur 11.

Les organes 21a, 21b, ..., 21i, ... 21n ont ici tous une borne reliée directement à la borne N, l'autre étant reliée à la borne P par l'intermédiaire d'interrupteurs 22a, 22b, ..., 22ᵢ, ..., 22n, respectivement. Les interrupteurs 22a, 22b, ..., 22i, ..., 22n sont pourvus chacun d'un contact fixe et d'un contact mobile.

Un circuit électronique 40, branché entre les bornes N et P, commande un moteur 41, ici un moteur synchrone à double sens, ainsi que le triac 15.

L'arbre de sortie 410 du moteur 41 entraîne des cames, non représentées sur la figure 1, qui exercent sur les contacts mobiles de l'inverseur double 12 et des interrupteurs 22a, 22b, ..., 22i, ..., 22n des forces schématisées par les flèches F. Les forces F agissent contre des forces de rappel des contacts mobiles pour les déplacer et alimenter, ou non, les organes correspondants.

Le programmateur de l'invention comprend le circuit électronique 40, le moteur 41, l'inverseur double 12 et les interrupteurs 22a, 22b, ..., 22i, ..., 22n de la figure 1, ainsi que les cames dont il a été question, et qui vont maintenant être décrites en référence à la figure 2.

Il apparaît, sur cette figure, que ces cames, circulaires, sont réparties en deux blocs 1 et 2.

Le premier bloc 1 comprend ici deux cames 10a et 10b qui actionnent respectivement chacun des contacts mobiles de l'inverseur 12.

Le deuxième bloc 2 comprend ici des cames 20a, 20b, ..., 20i, ..., 20n qui actionnent respectivement les contacts mobiles des interrupteurs 22a, 22b, ..., 22i, ..., 22n.

A l'intérieur d'un bloc, les cames sont solidaires entre elles, et chacun des deux blocs 1 et 2 est mobile en rotation autour d'un axe commun 3.

Chaque contact mobile est disposé sur un levier, qui coopère avec le profil de la came correspondante. A cet effet, et de façon connue, chacun des leviers est soumis à l'action d'une force exercée par exemple par un ressort, qui le rappelle contre le profil de la came correspondante, c'est-à-dire vers l'axe 3.

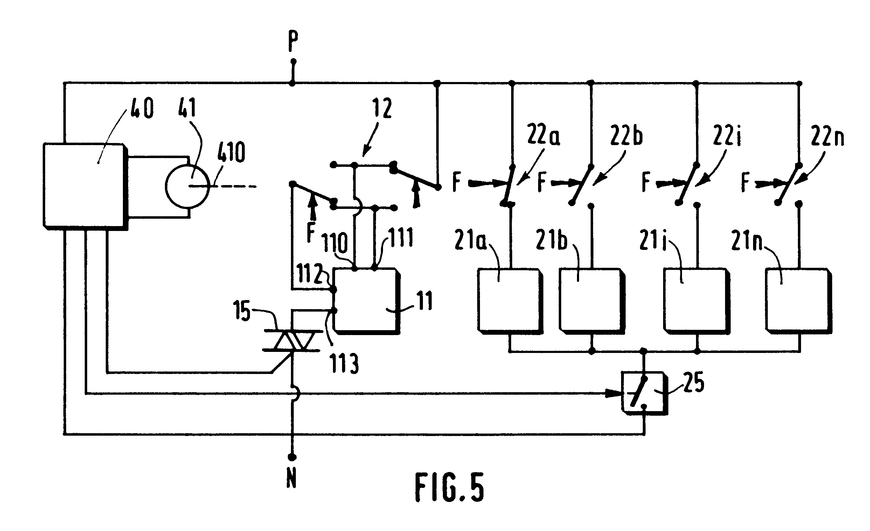

De part et d'autre de chacun des contacts mobiles de l'inverseur 12 sont disposés les deux contacts fixes correspondants. Comme le montre la figure 4, le profil de chacune des cames 10a et 10b comprend respectivement des bosses 101a et 101b, et des creux 102a et 102b, séparés par des portions 100a et 100b de profil neutre.

Lorsque un des leviers supportant un des contacts mobiles de l'inverseur 12 est sur une portion 100 de profil neutre, le contact mobile correspondant est isolé. Lorsqu'il est sur une bosse 101, le contact mobile touche le contact fixe le plus éloigné de l'axe 3, et lorsque le levier est sur un creux 102, le contact mobile touche le contact fixe le plus proche de l'axe 3.

Les contacts fixes de chacun des interrupteurs 22a, 22b, ..., 22i, ..., 22n sont disposés à côté des contacts mobiles correspondants, et les cames 20a, 20b, ..., 20i, ..., 22n comportent seulement des portions de profil neutre et des bosses. Les portions de profil neutre laissent l'interrupteur correspondant ouvert, tandis que les bosses le ferment.

Ici, et comme le montre la figure 2, les points de contact entre les leviers et les cames sont alignés sur une droite parallèle à l'axe 3.

Il en résulte notamment, compte tenu de la fonction de l'inverseur double 12, que le profil de la came 10a comprend successivement un creux 102a, faisant face à une bosse 101b de la came 10b, une portion neutre 100a, faisant face à une portion neutre 100b, une bosse 101a faisant face à un creux 102b, une portion neutre 100a, faisant face à une portion neutre 100b, et ainsi de suite. Ainsi est assurée une inversion du sens du branchement du rotor du moteur 11, ici avec un passage systématique par une position neutre.

De plus, et ici, le profil des cames 10a et 10b du premier bloc 1 est périodique, c'est-à-dire que la structure précédente se répète autour du bloc 1, avec une période P, comme le montre la figure 4.

Le moteur 41 entraîne, par l'intermédiaire d'un réducteur 42, le bloc 1.

La came du bloc 1 la plus proche du bloc 2, ici la came 10b, est pourvu d'un ergot 13 parallèle à l'axe de rotation 3 des blocs 1 et 2.

La came du bloc 2 la plus proche du bloc 1, ici la came 20a, est pourvue d'un évidement 23 ayant ici sensiblement la forme d'un secteur circulaire d'angle au centre A, comme le montre la figure 3. L'angle A est ici choisi supérieur à la période P.

L'ergot 13 pénètre dans l'évidement 23, de sorte que les blocs 1 et 2 se trouvent mécaniquement couplés, un jeu d'amplitude A étant ménagé dans un sens ou dans l'autre.

Le programmateur qui vient d'être décrit fonctionne comme suit.

On suppose par exemple que l'on veut exécuter un programme de lavage très simple, qui comprend le remplissage en eau de la machine, le chauffage de l'eau, et la vidange de la machine, ces trois phases étant accompagnées de mouvements de rotation dans un sens, et dans l'autre, du tambour de la machine.

Le circuit électronique 40 commande d'abord le triac 15 de façon à ce que celui-ci reste ouvert. Le moteur 11 est donc à l'arrêt.

Le circuit électronique 40 commande alors le moteur 41 de façon à ce que le bloc 1 se trouve entraîné dans le sens trigonométrique T, par exemple. Si l'ergot 13 est par exemple dans la position de la figure 3, c'est-à-dire au milieu de l'évidement 23, avant mise en marche, le bloc 2 reste d'abord immobile puis, lorsque le bloc 1 s'est déplacé d'un angle A/2, le bloc 2 se trouve entraîné par le bloc 1. Le circuit 40 commande le moteur 41 pour entraîner ainsi le bloc 2 jusqu'à ce que la bosse de la came 20a actionne l'interrupteur 22a pour commander l'électrovanne 21a d'admission d'eau. Naturellement, le circuit 40 est pourvu d'une mémoire dans laquelle sont stockées les positions des creux et des bosses de toutes les cames. De plus, il calcule à tout moment les positions des blocs 1 et 2 à partir des déplacements qu'il commande par l'intermédiaire du moteur 41 et de leurs positions initiales, qui ont été soit mémorisées lors de l'arrêt précédent, soit déterminés à la suite d'une procédure d'initialisation. Une telle procédure d'initialisation comprend par exemple, un entraînement dans un sens déterminé jusqu'à détection de positions particulières par des dispositifs de type connu, et non représentés dans un souci de simplicité.

Dès que l'admission d'eau a commencé, le circuit 40 commande l'inversion du sens de rotation du moteur 41, afin que le bloc 1 se déplace dans le sens I, inverse du sens trigonométrique T, d'un angle inférieur ou égal à A, de façon à ne pas modifier la position du bloc 2.

Il est évident que, en restant à l'intérieur du débattement permis par le jeu d'amplitude A, les cames 10a et 10b du bloc 1 peuvent commander l'alimentation du rotor du moteur 11 dans un sens ou dans l'autre, ou couper cette alimentation en restant sur les profils neutres 100a et 100b. Ceci est rendu possible ici du fait que la période P du profil des cames du bloc 1 est inférieure ou égale à l'amplitude A du jeu. Le circuit 40 peut donc, en commandant d'une part le triac 15 pour régler la vitesse du moteur 11, et d'autre part des mouvements de va et vient du moteur 41, commander la rotation dans un sens, puis dans l'autre, du tambour entraîné par le moteur 11. Naturellement, la durée de la rotation dans un sens, celle de la rotation dans l'autre sens, et celle du palier qui les sépare au cours duquel le tambour reste immobile sont variables par simple commande électronique en jouant sur le sens et la durée de chaque mise en rotation du moteur 41.

Dès que la cuve est remplie, le circuit électronique 40 en est averti par exemple par un détecteur de niveau non représenté car connu. Il peut commander le triac 15 pour arrêter le moteur 11, et déplacer le bloc 1 d'abord, puis le bloc 2, toujours dans le sens T, par exemple, pour amener celui-ci dans une position où la came 20a est neutre et où la came 20b actionne l'interrupteur 22b. L'admission d'eau est donc arrêtée, et le chauffage de l'eau, par la résistance 21a, a lieu.

Le triac 15 est alors commandé et le bloc 1 est entraîné dans le sens I sur un angle inférieur à A, puis dans le sens T, et ainsi de suite, de façon à commander les mouvements de va et vient du tambour. Naturellement, si il est jugé souhaitable d'avoir, pendant le chauffage, des mouvements de va et vient de durées différentes, par exemple, de ce qu'ils étaient au cours du remplissage, ceci est tout à fait possible et le circuit 40 est programmé en conséquence.

Le programme de lavage peut ainsi se dérouler jusqu'à la fin avec, comme cela a été souligné, une grande souplesse dans la commande des mouvements d'inversion du sens de rotation du tambour.

Naturellement, si les bosses 101 et les creux 102 sont beaucoup plus nombreux et rapprochés que cela n'a été représenté sur les figures, il est possible d'utiliser aussi le programmateur de l'invention comme un programmateur monobloc conventionnel, en commandant le moteur 41 pour qu'il tourne à vitesse constante, assez faible, et toujours dans le même sens. Comme cela est connu et évident, la durée de chacune des étapes du programme est alors liée à la longueur de chaque creux ou bosse et à la vitesse du moteur 41.

Le bloc 2 peut, comme dans les programmateurs de l'art antérieur, être divisé en une pluralité de secteurs angulaires correspondant chacun à un programme différent, le choix d'un de ces programmes étant fait en déplaçant le bloc 2 pour amener le début du secteur correspondant en face de la ligne de contacts entre les cames et les leviers, et le déroulement de ce programme étant obtenu en faisant ensuite balayer ce secteur par le bloc 2. Dans un tel cas, c'est le bloc 2 qui mémorise, au moins en partie, les programmes de lavage.

Toutefois le bloc 2 peut également, et comme cela a été représenté sur la figure 2, être tel que chaque came ne comprend qu'une seule bosse, réparties pour que le bloc 2 comporte une pluralité de secteurs, à l'intérieur de chacun desquels un seul organe 21a, 21b, ..., 21i, ..., 21n se trouve alimenté, en principe. Naturellement, si l'on prévoit qu'il sera parfois nécessaire d'alimenter en même temps deux ou plusieurs organes 21a, 21b ..., 21i, ..., 21n, les secteurs correspondants seront prévus. Dans ce cas, la structure mécanique du bloc 2 est plus simple, et les programmes sont mémorisés dans le circuit électronique 40. Celui-ci commande le bloc 2 non plus pour avancer d'un pas de programme à chaque fois, sans se préoccuper de l'organe qui va être ainsi mis en marche, mais pour aller mettre en marche un organe déterminé, à commander au cours de ce pas de programme.

On notera qu'il n'est pas nécessaire, alors, que le bloc 2 soit commandé toujours dans le même sens, et que l'on peut choisir le sens de déplacement du bloc 2 qui minimise la durée de chacun des déplacements à effectuer.

Dans un cas comme dans l'autre, lorsque le bloc 2 se trouve entraîné assez rapidement pour aller vers le début d'un programme déterminé, s'il est du type "à mémoire", où pour aller commander un organe déterminé, s'il est du type "sans mémoire", il passe par un certain nombre de positions intermédiaires, ce qui a pour effet d'alimenter brièvement certains organes.

Dans certains cas, on peut tolérer ce phénomène. Dans d'autres il est considéré comme gênant, parce qu'il est à l'origine de bruits parasites, et parce qu'il risque d'endommager les organes ainsi mis sous tension pour un trop bref intrvalle de temps.

La figure 5 montre une variante de la machine de la figure 1, pour lequel il est prévu un relais 25, commandé par le circuit 40 pour mettre hors circuit les organes 21a, 21b, ..., 21i,..., 21n lors des déplacements du bloc 2. Le relais 25 est disposé dans une connexion commune reliant les organes 21a, 21b, ..., 21i, ..., 21n à la borne N. Il n'est pas nécessaire de prévoir ici un relais pour le moteur 11, le triac 15 permettant d'ouvrir la connexion si nécessaire.

Le relais 25 est donc commandé par le circuit 40 avant tout déplacement du bloc 2 susceptible d'occasionner le phénomène décrit.

Le circuit électronique 40 est, par exemple, un circuit à microprocesseur. La conception d'un tel circuit, à partir de la description qui a été faite des fonctions qu'il doit réaliser, est évidente pour un homme du métier.

Naturellement, la portée de la présente demande n'est pas limitée à la description qui vient d'être faite, et qui a été volontairement simplifiée dans un souci de simplicité. C'est ainsi, que, à titre d'exemple, et de façon connue, il est possible de prévoir, sur le moteur universel 11, un inducteur à prise intermédiaire, pour n'utiliser qu'une partie de cet inducteur losqu'on a besoin que le moteur 11 tourne à vitesse très élevée. Dans ce cas, un inverseur simple, actionné par une came du bloc 2, commande le branchement de la totalité ou d'une partie seulement de l'inducteur.

De même, les moyens de couplage qui ont été décrits ne sont pas limitatifs, et il est possible notamment, d'inverser les positions de l'ergot et de l'évidement, ou de changer leur forme, tout en conservant un couplage ménageant un jeu.

De même, dans l'exemple décrit, les cames du premier bloc 1 sont relatives à l'inversion du sens de rotation du moteur du tambour, tandis que celle du deuxième bloc 2 sont relatives à la commande des autres organes de la machine. Si une telle répartition est intéressante, comme on l'a vu, dans le cas d'une machine à laver le linge, elle n'est, même dans ce cas, pas obligatoire et l'homme du métier est à même de choisir la répartition qui est la plus intéressante, compte tenu du problème spécifique à résoudre.

Enfin, le fait que le profil des cames du premier bloc soit périodique et de période inférieure à l'amplitude du jeu permet de conserver toutes les possibilités de commande à l'aide du premier bloc, quelle que soit la position du deuxième bloc. Ceci donne donc une grande souplesse dans l'emploi du programmateur. Toutefois, il peut y avoir des situations où cette possibilité n'est pas indispensable, et ou l'on peut bénéficier de l'adaptabilité du programmateur de l'invention dans la mesure où celui-ci permet, dans certaines positions du deuxième bloc, certaines possibilités de commande à l'aide du premier bloc. Or un tel avantage peut être obtenu dès lors qu'un certain jeu est ménagé par les moyens de couplage entre le premier et le deuxième bloc.

Naturellement, le programmateur n'est pas limité à la commande d'une pluralité d'organes réunis au sein d'un même appareil, et peut être utilisé dans le cas d'un système industriel comprenant une pluralité d'organes disséminés.

## Revendications

1. Programmateur pour appareil, ou système, pourvu d'une pluralité d'organes électriques (11, 21a-21n) à alimenter sélectivement et séquentiellement, programmateur comprenant une pluralité de cames (10a-10b, 20a-20n) réparties en un premier (1) et un deuxième (2) blocs munis de moyens de couplage mécanique (13,23), lesdites cames coopérant avec une pluralité de contacts (12,22a-22n) d'alimentation desdits organes, et des moyens d'entraînement (40-41) desdites cames, en déplacement, programmateur caractérisé par le fait que :
- lesdits moyens d'entraînement (40-41) sont agencés pour entraîner ledit premier bloc (1) dans les deux sens,
- les moyens (13,23) de couplage mécanique entre ledit premier (1) et ledit deuxième (2) blocs, ménagent un jeu,
de manière que :
- dans un premier mode de fonctionnement, les moyens d'entraînement (40-41) entraînent le deuxième bloc (2) par l'intermédiaire du premier bloc (1) dans un sens ou dans l'autre selon que le deuxième bloc (2) est en butée sur le premier bloc (1) à l'une ou l'autre extrémité dudit jeu,
- dans un deuxième mode de fonctionnement, les moyens d'entraînemant (40-41) entraînent seulement le premier bloc (1) dans un sens ou dans l'autre, dans un mouvement d'amplitude inférieure audit jeu, le deuxième bloc (2) restant immobile.

2. Programmateur selon la revendication 1, dans lequel les cames dudit premier bloc (1) ont un profil périodique de période (P) inférieure ou égale à l'amplitude (A) dudit jeu.

3. Programmateur selon l'une des revendications 1 ou 2, dans lequel lesdits moyens d'entraînement comprennent un moteur (41) à double sens et un circuit électronique (4a) de commande dudit moteur (41).

4. Programmateur selon l'une des revendications 1 à 3, dans lequel lesdits moyens de couplage comprennent un ergot (13) solidaire d'un desdits blocs (1) et un évidement (23) pratiqué dans l'autre desdits blocs (2), coopérant avec ledit ergot (13).

## Claims

1. Programmer for an apparatus, or system, provided with a plurality of electrical members (11, 21a-21n-) to be supplied selectively and sequentially, the programmer comprising a plurality of cams (10a-10b, 20a-20n) distributed in a first set (1) and a second set (2) provided with mechanical coupling means (13, 23), said cams cooperating with a plurality of contacts (12, 22a-22n) for supplying said members and means (40-41) for setting said cams in displacement, programmer characterised by the fact that:
- said drive means (40-41) are arranged in order to drive said first set (1) in both directions,
- the means (13, 23) for mechanical coupling between said first set (1) and said second set (2), provide a clearance, in order that:
- in a first method of operation, the drive means (40-41) drive the second set (2) through the intermediary of the first set (1) in one direction or in the other direction depending on whether the second set (2) is in abutment with the first set (1) at one or the other end of said clearance,
- in a second method of operation, the drive means (40-41) solely drive the first set (1) in one direction or the other, in a movement whose amplitude is less than said clearance, the second set (2) remaining stationary.

2. Programmer according to Claim 1, in which the cams of said first set (1) have a periodic profile whereof the period (P) is less than or equal to the amplitude (A) of said clearance.

3. Programmer according to one of Claims 1 or 2, in which said drive means comprise a two-direction motor (41) and an electronic circuit (4a) for controlling said motor (41).

4. Programmer according to one of Claims 1 to 3, in which said coupling means comprise a lug (13) integral with one of said sets (1) and a recess (23) provided in the other of said sets (2), cooperating with said lug (13).

## Patentansprüche

1. Programmschalteinrichtung für ein Gerät oder System mit einer Vielheit elektrischer, selektiv und sequentiell zu speisender Bauteile (11, 21a-21n), Programmschalteinrichtung umfassend eine Vielheit von Nocken (10a-10b, 20a-20n), die in einem ersten (1) und einem zweiten (2), mit mechanischen Kupplungsvorrichtungen (13,23) ausgerüsteten Block verteilt sind, wobei die besagten Nocken mit einer Vielheit von Einspeisungskontakten (12, 22a-22n) für die besagten Bauteile zusammenwirken, und Antriebsmittel (40-41) für die besagten, in Bewegung befindlichen Nocken, Programmschalteinrichtung dadurch gekennzeichnet, daß:
- die besagten Antriebsmittel (40-41) den besagten ersten Block (1) in beiden Richtungen antreiben,
- die mechanischen Kupplungsvorrichtungen (13,23) zwischen dem besagten ersten (1) und dem besagten zweiten Block (2) ein Spiel aussparen,
sodaß
- in einer ersten Funktionsart die Antriebsmittel (40-41) den zweiten Block (2) über den ersten Block (1) in der einen oder anderen Richtung antreiben, je nachdem ob der zweite Block (2) an dem einen oder anderen Ende des besagten Spiels an den ersten Block (1) stößt,
- in einer zweiten Funktionsart die Antriebsmittel (40-41) nur den ersten Block (1) in der einen oder anderen Richtung antreiben, in einer Bewegung mit kleinerem Weg als das besagte Spiel, wobei der zweite Block (2) bewegungslos bleibt.

2. Programmschalteinrichtung gemäß Anspruch 1, bei welcher die Nocken des besagten ersten Blocks (1) ein periodisches Profil mit einer Periode (P) aufweisen, die kleiner/gleich der Größe (A) des besagten Spiels ist.

3. Programmschalteinrichtung gemäß einem der Ansprüche 1 oder 2, bei welcher die besagten Antriebsmittel einen bidirektionalen Motor (41) und einen elektronischen Steuerkreis (4a) für den besagten Motor (41) umfassen.

4. Programmschalteinrichtung gemäß einem der Ansprüche 1 - 3, bei welcher die besagten Kupplungsvorrichtungen einen mit einem der besagten Blöcke (1) verbundenen Nocken (13) und eine in den anderen der besagten Blöcke (2) eingebrachte Aussparung (23) umfassen, welche mit dem besagten Nocken (13) zusammenwirkt.
